# EUROPEAN PATENT APPLICATION

(11) **EP 4 675 399 A1**
(43) Date of publication of application: **07.01.2026**
(21) Application number: 24870124.5
(22) Date of filing: 08.08.2024
(51) Int. Cl.: G06F 1/3296

(54) **METHOD AND APPARATUS FOR REDUCING POWER CONSUMPTION**

(30) Priority: 28.09.2023 CN 202311290211
(71) Applicant: Honor Device Co., Ltd., Shenzhen, Guangdong 518040 (CN)
(72) Inventor: HU, Qiangli, Shenzhen, Guangdong 518040 (CN); LIU, Rui, Shenzhen, Guangdong 518040 (CN)
(74) Representative: Goddar, Heinz J.
(86) International application number: PCT/CN2024/110843
(87) International publication number: WO 2025/066576

(57) **Abstract**

Embodiments of this application relate to the technical field of terminals, and provide a method and an apparatus for reducing power consumption. An electronic device displays a first interface of a first application, where the first application is at a first frame rate. The electronic device displays a second interface in response to a first operation, where the second interface does not include any window of the first application. The first application sends a drawing request to perform drawing in a first window, the electronic device sets a frame rate of the first application to a second frame rate, the second frame rate is less than the first frame rate, and the first window is invisible. In this way, when the first application is switched from a foreground to a background, the electronic device may reduce the frame rate of the first application, thereby reducing power consumption as a result of the first application still requesting for a vsync signal to draw an image frame after entering the background.

## Description

This application claims priority to Chinese Patent Application No. 202311290211.9, filed with China National Intellectual Property Administration on September 28, 2023 and entitled "METHOD AND APPARATUS FOR REDUCING POWER CONSUMPTION", which is incorporated herein by reference in its entirety.

### TECHNICAL FIELD

This application relates to the technical field of terminals, and in particular, to a method and an apparatus for reducing power consumption.

### BACKGROUND

With popularization and development of the Internet, people have increasingly diverse functional requirements for an electronic device. For example, to improve a use requirement of a user on the electronic device, the electronic device may support downloading of various types of applications, and each of the applications may be a system application or a three-party application.

However, running of many applications in the electronic device causes excessively high power consumption of the device. For example, the application running on the electronic device may request a vertical synchronization (vertical synchronization, vsync) signal to perform image drawing, so as to trigger a drawing and rendering process of an image frame. Some power consumption is needed for performing the actions.

### SUMMARY

Embodiments of this application provide a method and an apparatus for reducing power consumption, so that an electronic device can reduce a frame rate when detecting that no visible window exists in a foreground, thereby reducing power consumption as a result of some applications still requesting for a vsync signal to draw an image frame after entering the background.

According to a first aspect, an embodiment of this application provides a method for reducing power consumption. The method includes: An electronic device displays a first interface of a first application, where the first application is at a first frame rate. The electronic device displays a second interface in response to a first operation, where the second interface does not include any window of the first application; and the first application sends a drawing request to perform drawing in a first window, the electronic device sets a frame rate of the first application to a second frame rate, the second frame rate is less than the first frame rate, and the first window is invisible.

The first interface may be an interface displayed when the first application is in the foreground, and the first operation is an operation of switching the first application from the foreground to the background. The second interface may display a desktop or may display an interface of another application.

In this way, when the first application is switched from the foreground to the background, the electronic device may reduce the frame rate of the first application, thereby reducing power consumption as a result of the first application still requesting for the vsync signal to draw the image frame after entering the background.

In a possible implementation, that the electronic device sets a frame rate of the first application to a second frame rate includes: The electronic device sends the frame rate of the first application to the second frame rate when the first application belongs to a first list, where the first list includes an application allowed to request for a vertical synchronization vsync signal in a background.

In this way, the electronic device may configure the first list to perform frame reduction when the application allowed to request for the vsync signal in the background is switched to the background, thereby reducing power consumption caused by image drawing at a high frame rate.

The first list may be the first control list in this embodiment of this application.

In a possible implementation, the method further includes: The electronic device displays a third interface of a second application, where the second application is at the first frame rate. The electronic device displays a fourth interface in response to a second operation, where the fourth interface does not include any window of the second application; and the second application sends the drawing request to perform drawing in the second window, the electronic device keeps the second application at the first frame rate, the second window is invisible, and the second application does not belong to the first list.

The third interface may be an interface displayed when the second application is in the foreground, and the second operation is an operation of switching the first application from the foreground to the background. The fourth interface may display a desktop or may display an interface of another application.

In this way, when the second application is switched from the foreground to the background, the second application does not request for the vsync signal in the background because the second application does not belong to the first list. The electronic device does not need to perform frame reduction for the second application, and the second application may maintain the first frame rate.

In a possible implementation, after the electronic device sets the frame rate of the first application to the second frame rate, the method further includes: The electronic device adds the first application to a second list, to obtain a third list, where the second list includes an application at the second frame rate, and the third list includes the first application.

The second list and the third list may both be the second control list in this embodiment of this application.

In this way, the electronic device may control a situation of the application of frame reduction in real time through the setting of the second control list.

In a possible implementation, a first thread is run on the electronic device. The electronic device delivers the first vsync signal to the first application at a second moment through the first thread when receiving, at a first moment, a first vsync signal request sent by the first application. The electronic device delivers a second vsync signal to the first application at a fourth moment through the first thread when receiving, at a third moment, a second vsync signal request sent by the first application, where the second vsync signal request is a next vsync signal request of the first vsync signal request, and a time interval between the fourth moment and the second moment is determined by the electronic device based on the second frame rate.

In this way, the electronic device may perform delay delivery of the vsync signal requested by an application in the background through the first thread, thereby reducing power consumption caused when the background application performs picture drawing.

In a possible implementation, that the electronic device delivers a second vsync signal to the first application at a fourth moment through the first thread when receiving, at a third moment, a second vsync signal request sent by the first application includes: The electronic device awakes the first thread when receiving, at the third moment through a second thread, the second vsync signal request sent by the first application and determining that the first application is in the third list, where the first thread starts a timer, and the timer notifies the first thread to deliver, at the fourth moment, the second vsync signal to the first application.

In this way, the electronic device may awake the first thread, so that the first thread implements delay delivery of the vsync signal, thereby reducing power consumption caused when the background application performs picture drawing.

In a possible implementation, the electronic device runs a third application in a foreground, and a second thread is run in the electronic device. The electronic device delivers a third vsync signal to the third application through the second thread and delivers the first vsync signal to the first application at the second moment through the first thread when the electronic device receives a third vsync signal request sent by the third application.

In this way, the electronic device may control delivery of different vsync signals through two threads, thereby ensuring delay delivery of the vsync signal of the background application and keeping normal running of the foreground and background application without affecting requesting the vsync signal to the foreground application for picture drawing.

In a possible implementation, a fourth application is further run in the electronic device, the fourth application belongs to the first list and belongs to the third list, the electronic device receives, at a moment between the third moment and the fourth moment, a fourth vsync signal request sent by the fourth application, and the method further includes: The electronic device delivers the second vsync signal to the first application at the fourth moment through the first thread, and delivering the fourth vsync signal to the fourth application at the fourth moment.

In this way, when the fourth application also belongs to the third list, the electronic device may control the delivery of vaync signals of two applications through one thread, to ensure that both applications in the background may perform picture drawing at the first frame rate.

In a possible implementation, the electronic device is configured with a display composition system, an event thread event thread is run in the display composition system, the second thread is a main thread main thread in the event thread, and the first thread is a delay thread delay thread in the event thread.

In a possible implementation, the method further includes: The electronic device sets the frame rate of the first application to the first frame rate in response to an operation of closing the first application when the first application belongs to the first list. The electronic device removes the first application from the third list. the first application from the third list.

In this way, when the first application is closed, the electronic device may resume the frame rate of the first application to the first frame rate. In this way, when the first application is subsequently started, the electronic device may continue to perform picture drawing on the first application through the first frame rate.

In a possible implementation, the electronic device is configured with an activity task manager service and a display composition system, and that the electronic device sets a frame rate of the first application to a second frame rate includes: The task manager service sends a first message to the display composition system, where the first message includes a package name of the first application, information used for indicating that a frame reduction feature is enabled, and information used for indicating that the first application is in a background. The display composition system obtains the second frame rate based on the information used for indicating that the frame reduction feature is enabled. The display composition system sets the frame rate of the first application to the second frame rate.

In this way, the task manager may initiate a frame reduction process by sending the first message to the display composition system, so that the display composition system may delay delivery of the vsync signal requested by the first application based on the second frame rate, thereby reducing power consumption as a result of the first application still requesting for the vsync signal to draw the image frame after entering the background.

In a possible implementation, the first message further includes a user identifier UID of the first application.

In this way, some applications in the electronic device may support an application cloning function, and package names of applications may not distinguish two applications that are cloned. Therefore, the electronic device may distinguish applications specifically running in an application cloning scenario through the package name of the first application and the UID of the first application, to improve accuracy of method for reducing power consumption.

In a possible implementation, the method further includes: After the electronic device adds the first application to a second list, to obtain a third list, the method further includes: The electronic device requests a window of the first application to be visible in response to a third operation. The electronic device sets the frame rate of the first application to the first frame rate when the first application belongs to the first list. The electronic device removes the first application from the third list.

In this way, the electronic device may resume the first frame rate of the first application when detecting that the first application is switched from the background to the foreground, so that the first application may maintain the first frame rate in the foreground to perform picture drawing, thereby avoiding picture freezing in the first application.

The third operation may be an operation of switching the first application from the background to the foreground.

In a possible implementation, before the electronic device sets the frame rate of the first application to the first frame rate, the method further includes: The electronic device sets the frame rate of the first application to the first frame rate when the electronic device receives first frame of data from the first application and the electronic device determines that the first application belongs to the third list, where the frame data is data obtained through layer rendering when the first application receives a vsync signal. The electronic device removes the first application from the third list.

In this way, to prevent the display composition system from not receiving the first frame rate in the second message when the first application receives frame data for the first time, resulting in a frame rate abnormality in the foreground application and page frame freezing, the display composition system may resume to the first frame rate in advance when detecting that the first application is in the foreground and receives the first frame data.

In a possible implementation, the electronic device is configured with a window manager, an activity task manager service, and a display composition system, and that the electronic device requests a window of the first application to be visible includes: The window manager requests the window of the first application to be visible. The window manager sends a second message to the activity task manager service, where the second message is used to instruct the first application to return to a foreground. That the electronic device sets the frame rate of the first application to the first frame rate when the first application belongs to the first list includes: The activity task manager service sends a third message to the display composition system in response to the second message when the activity task manager service determines that the first application belongs to the first list, where the third message includes a package name of the first application, information used for indicating that a frame reduction feature is disabled, and information used for indicating that the first application is in a foreground. The display composition system obtains the first frame rate based on the information used for indicating that the frame reduction feature is disabled. The display composition system sets the frame rate of the first application to the first frame rate.

In this way, the task manager may initiate a frame rate resume process by sending the second message to the display composition system, so that the display composition system may normally deliver the vsync signal requested by the first application in the foreground based on the first frame rate, to ensure normal running of the foreground application.

In a possible implementation, the second message further includes a user identifier UID of the first application.

In this way, some applications in the electronic device may support an application cloning function, and package names of applications may not distinguish two applications that are cloned. Therefore, the electronic device may distinguish applications specifically running in an application cloning scenario through the package name of the first application and the UID of the first application, to improve accuracy of method for reducing power consumption.

According to a third aspect, an embodiment of this application provides a display apparatus. The display apparatus includes a display unit and a processing unit, where the display unit is configured to process a data display step in the display apparatus, and the processing unit is configured to process a data processing step in the display apparatus.

In a possible implementation, the display apparatus may further include a storage unit. The storage unit may include one or more memories, and the memories may be one or more devices or components in a circuit for storing programs or data.

According to a second aspect, an embodiment of this application provides an electronic device, including a processor and a memory. The memory is configured to store code instructions. The processor is configured to run the code instructions, to cause the electronic device to perform the method in the first aspect or any one of implementations of the first aspect.

According to a third aspect, an embodiment of this application provides a computer-readable storage medium. The computer-readable storage medium stores instructions. When the instructions are executed, a computer is caused to perform the method in the first aspect or any one of implementations of the first aspect.

According to a fourth aspect, a computer program product includes a computer program. When the computer program is run, the computer is caused to perform the method in the first aspect or any one of implementations of the first aspect.

It should be understood that the second aspect to the fourth aspect of this application correspond to the technical solution of the first aspect of this application, and the beneficial effects obtained by each aspect and the corresponding feasible implementations are similar. Details are not described herein again.

### BRIEF DESCRIPTION OF DRAWINGS

FIG. 1 is a schematic diagram of a hardware structure of an electronic device according to an embodiment of this application;
FIG. 2 is a schematic diagram of a software structure of an electronic device according to an embodiment of this application;
FIG. 3 is a schematic flowchart of a method for reducing power consumption according to an embodiment of this application;
FIG. 4 is a schematic flowchart of another method for reducing power consumption according to an embodiment of this application;
FIG. 5 is a schematic flowchart of resuming a frame rate according to an embodiment of this application;
FIG. 6A, FIG. 6B, and FIG. 6C are a schematic diagram of an interface for switching an application state according to an embodiment of this application;
FIG. 7 is a schematic diagram of a process of delivering a vsync signal according to an embodiment of this application;
FIG. 8 is a schematic diagram of a process of delivering a vsync signal according to an embodiment of this application;
FIG. 9 is a schematic flowchart of obtaining a first control list according to an embodiment of this application;
FIG. 10 is another schematic flowchart of obtaining a first control list according to an embodiment of this application;
FIG. 11 is a schematic structural diagram of an apparatus for reducing power consumption according to an embodiment of this application; and
FIG. 12 is a schematic diagram of a hardware structure of another electronic device according to an embodiment of this application.

### DESCRIPTION OF EMBODIMENTS

For ease of describing the technical solutions in embodiments of this application clearly, in embodiments of this application, words such as "first" and "second" are used to distinguish same or similar items with a basically same function and role. For example, a first value and a second value are merely used for distinguishing between different values, and are not intended to limit a sequence thereof. A person skilled in the art may understand that the words such as "first" and "second" do not limit a quantity and an execution order, and the words such as "first" and "second" are not limited to be necessarily different.

It should be noted that in this application, words such as "in an example" or "for example" represent giving an example, an illustration, or a description. Any embodiment or design solution described as "in an example" or "for example" in this application should not be explained as being more preferred or advantageous than another embodiment or design solution. Exactly, use of the words such as "in an example" or "for example" is intended to present a concept in a specific manner.

In this application, "at least one" refers to one or more, and "a plurality of" refers to two or more. "And/or" describes an association relationship between associated objects and indicates that three relationships may exist. For example, A and/or B may indicate the following three cases: only A exists, both A and B exist, and only B exists, where A and B may be singular or plural. The character "/" generally indicates that the associated objects are in an "or" relationship. "At least one of the following items (pieces)" or a similar expression thereof refers to any combination of these items, including any combination of singular items (pieces) or plural items (pieces). For example, at least one of the items (pieces) of a, b, or c may represent that a, b, c, a and b, a and c, b and c, or a, b, and c. a, b, and c may be one or more.

Generally, an application running on a foreground of an electronic device may request a vsync signal to trigger a drawing and rendering process of an image frame, and an application running on a background of an electronic device does not need to request the vsync signal. However, some applications that are not developed in a standardized way exist. After entering the background, the application still requests for the vsync signal to draw the image frame. Even the application running on the background may still repeatedly request for the vsync signal indefinitely, wasting central processing unit (central processing unit, CPU) resources and device power consumption.

Based on the above, embodiments of this application provide a method for reducing power consumption, so that the electronic device can reduce a frame rate when detecting that no visible window exists in the foreground, and reduce power consumption as a result of some applications still requesting for a vsync signal to draw an image frame after entering the background.

It may be understood that, the foregoing electronic device may also be referred to as a terminal (terminal), a user equipment (user equipment, UE), a mobile station (mobile station, MS), a mobile terminal (mobile terminal, MT), or the like. The electronic device may be a mobile phone (mobile phone) with a touch screen, an intelligent television, a smart television, a wearable device, a tablet computer (Pad), a computer with a wireless transceiver function, a virtual reality (virtual reality, VR) electronic device, an augmented reality (augmented reality, AR) electronic device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), and the like. Embodiments of this application impose no limitation on a specific technology and a specific device form used by the electronic device.

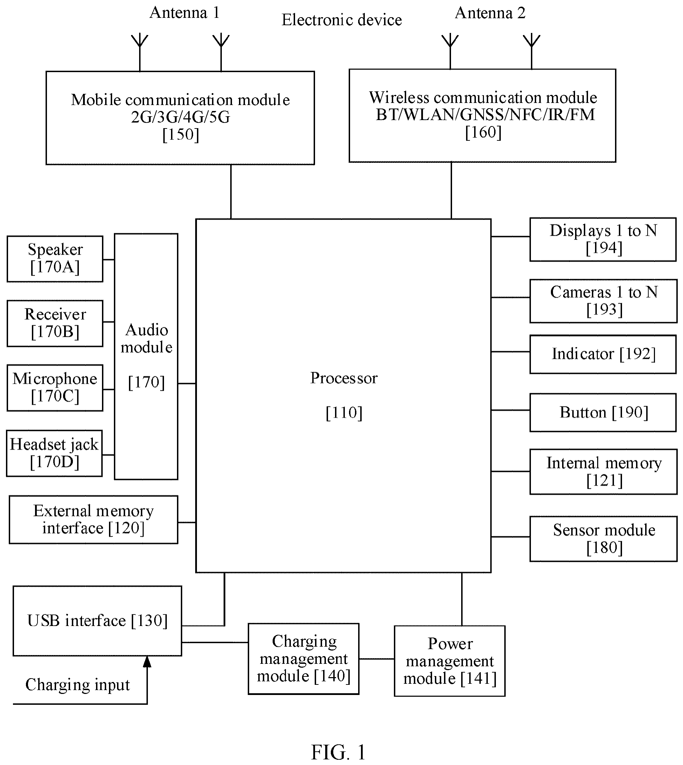

Therefore, to better understand embodiments of this application, a structure of the electronic device in embodiments of this application is described below. In an example, FIG. 1 is a schematic structural diagram of an electronic device according to an embodiment of this application.

The electronic device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a button 190, an indicator 192, a camera 193, a display 194, and the like.

The sensor module 180 may include one or more of the following: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like. This is not specifically limited in this embodiment of this application.

It may be understood that the schematic structure in this embodiment of this application constitutes no specific limitation on the electronic device. In some other embodiments of this application, the electronic device may include more or fewer components than those shown in the figure, or some components may be combined, or some components may be split, or a different component arrangement may be used. The components shown in the figure may be implemented by hardware, software, or a combination of software and hardware.

The processor 110 may include one or more processing units. Different processing units may be independent devices, or may be integrated into one or more processors. A memory may be further arranged in the processor 110, which is configured to store instructions and data.

The USB interface 130 is an interface that complies with a USB standard specification, and may be specifically a Mini USB interface, a Micro USB interface, a USB Type C interface, and the like. The USB interface 130 may be configured to be connect to a charger to charge the electronic device, or may be configured to perform data transmission between the electronic device and a peripheral device. The USB interface may alternatively be configured to be connected to a headset to play audio through the headset. The interface may further be configured to connect to another electronic device such as an AR device.

The charging management module 140 is configured to receive a charging input from the charger. The charger may be a wireless charger, or may be a wired charger. The power management module 141 is configured to be connected to the charging management module 140 and the processor 110.

A wireless communication function of the electronic device may be implemented through the antenna 1, the antenna 2, the mobile communication module 150, the wireless communication module 160, a modem processor, a baseband processor, and the like.

The antenna 1 and the antenna 2 are configured to transmit and receive an electromagnetic wave signal. The antenna in the electronic device may be configured to cover one or more communication frequency bands. Different antennas may further be multiplexed to improve utilization of the antennas.

The mobile communication module 150 may provide a wireless communication solution including 2G/3G/4G/5G and the like applicable to the electronic device. The mobile communication module 150 may include at least one filter, a switch, a power amplifier, and a low noise amplifier (low noise amplifier, LNA), and the like. The mobile communication module 150 may receive an electromagnetic wave through the antenna 1, perform processing such as filtering and amplification on the received electromagnetic wave, and send the processed electromagnetic wave to the modem processor for demodulation.

The wireless communication module 160 may provide a solution for wireless communication including wireless local area networks (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), and the like to be applied to the electronic device.

The electronic device implements a display function by using the GPU, the display 194, the application processor, and the like. The GPU is a microprocessor for image processing and is connected to the display 194 and the application processor. The GPU is configured to perform mathematical and geometric calculation, and is configured to perform graphics rendering.

The display 194 is configured to display an image, a video, or the like. The display 194 includes a display panel. In some embodiments, the electronic device may include 1 or N displays 194, where N is a positive integer greater than 1.

The electronic device may implement a photographing function through the ISP, the camera 193, the video codec, the GPU, the display 194, the application processor, and the like.

The camera 193 is configured to capture a still image or a video. In some embodiments, the electronic device may include 1 or N cameras 193, where N is a positive integer greater than 1.

The external memory interface 120 may be configured to connect an external storage card such as a Micro SD card, to improve a storage capacity of the electronic device. The external storage card communicates with the processor 110 through the external memory interface 120, to implement a data storage function. For example, files such as music and a video are stored into the external storage card.

The internal memory 121 may be configured to store computer executable program code, where the executable program code includes instructions. The internal memory 121 may include a program storage area and a data storage area.

The electronic device may use the audio module 170, the speaker 170A, the receiver 170B, the microphone 170C, the headset jack 170D, the application processor, and the like, to implement an audio function, such as music playback and recording.

The audio module 170 is configured to convert digital audio information into an analog audio signal for output, and is further configured to convert an analog audio input into a digital audio signal. The speaker 170A, also referred to as a "horn", is configured to convert an electrical audio signal into a sound signal. The electronic device can listen to music by using the speaker 170A, or receive a hands-free call. The receiver 170B, also referred to as "earpiece", is configured to convert an electrical audio signal into a sound signal. When the electronic device receives a call or a voice message, the receiver 170B may be placed close to an ear to receive the voice. The headset jack 170D is configured to be connected to a wired headset. The microphone 170C, also referred to as a "voice tube" or "mike", is configured to convert a sound signal into an electrical signal. In an embodiment of this application, the electronic device may be provided with one microphone 170C.

The pressure sensor is configured to sense a pressure signal, and may convert the pressure signal into an electrical signal. In some embodiments, the pressure sensor may be arranged in the display 194. The gyroscope sensor may be configured to determine a movement posture of the electronic device. The barometric pressure sensor is configured to measure an air pressure. The magnetic sensor includes a Hall sensor. The acceleration sensor may detect an acceleration value of the electronic device in each direction (generally in three axes). The distance sensor is configured to measure a distance. The optical proximity sensor may include, for example, a light emitting diode (LED) and an optical detector, for example, a photo diode. The ambient light sensor is configured to sense luminance of ambient light. The fingerprint sensor is configured to collect a fingerprint. The temperature sensor is configured to detect a temperature. The touch sensor is also referred to as a "touch device". The bone conduction sensor may obtain a vibration signal.

The touch sensor may be arranged in the display 194. The touch sensor and the display 194 form a touch screen, which is also referred to as a "touch screen". In this embodiment of this application, a capacitive sensing node grid (which is referred to as a capacitive sensor for short below) may be arranged in the touch screen. When determining that a value of capacitance in at least one grid that is received by the capacitive sensor exceeds a capacitance threshold, the electronic device may determine that a touch operation occurs. Further, the electronic device may determine the touch area corresponding to the touch operation based on an area occupied by the at least one grid beyond the capacitance threshold.

The button 190 includes a power-on button, a volume button, and the like. The button 190 may be a mechanical button, or a touch button. The electronic device may receive a button input, and generate a button signal input related to user setting and function control of the electronic device. The indicator 192 may be an indicator light, and may be configured to indicate a charging state or a battery change, or may be configured to indicate a message, a missed call, a notification, and the like.

A software system of the electronic device may use a layered architecture, an event-driven architecture, a microcore architecture, a microservice architecture, or a cloud architecture. Details are not described herein.

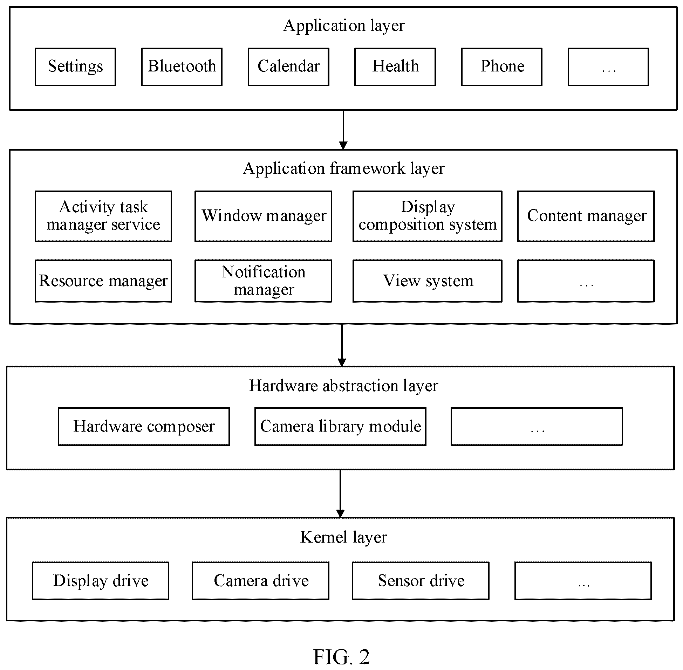

In an example, FIG. 2 is a schematic diagram of a software structure of an electronic device according to an embodiment of this application. As shown in FIG. 2, the layered architecture divides software into several layers, each layer having a clear role and responsibility. The layers communicate with each other through a software interface. In some embodiments, the android system is divided into a plurality of layers from top to bottom: an application (application, APP) layer, an application framework (framework) layer, a hardware abstraction layer (hardware abstraction layer, HAL), and a kernel (kernel) layer. This is not limited in this embodiment of this application.

The application layer may include a series of application packages. The application layer may include one or more of the following: settings, Bluetooth, calendar, health, phone, or the like. This is not limited in this embodiment of this application.

The application framework layer provides an application programming interface (application programming interface, API) and a programming framework for applications at the application layer. The application framework layer includes some predefined interfaces. The application framework layer may include one or more of the following: an activity task manager service (activity task manager service, ATMS), a window manager service (window manager service, WMS), a display composition system (surface flinger), a window manager, a content provider, a resource manager, a view system, a notification manager, or the like.

The activity task manager service is configured to determine whether to reduce a frame rate of an application based on a frequency reduction optimization switch or whether a foreground-visible window exists, and the like.

The window manager is configured to manage a window program. For example, the window manager may be configured to request for a window of a foreground, obtain a size of the display, determine whether a status bar exists, perform screen locking, perform screen touching, perform screen dragging, perform screenshot, and the like.

The display composition system is used for implementing frame rate switching and layer composition.

The content provider is configured to store and obtain data, and enable the data to be accessible to an application. The data may include a video, an image, an audio, calls that are made and answered, a browse history and a bookmark, a phonebook, and the like. The view system includes visual controls such as a control configured to display a text and a control configured to display a picture. The view system may be used for constructing an application. A display interface may be composed of one or more views. For example, a display interface including a short message notification icon may include a view for displaying a text and a view for displaying a picture. The resource manager provides various resources such as a localized character string, an icon, a picture, a layout file, and a video file for an application.

The hardware abstraction layer is intended to abstract hardware, and may provide a unified interface for querying a hardware device for an upper-layer application, or may provide a data storage service for an upper-layer application. The hardware abstraction layer may include a module such as a hardware composer (hardware composer, HWC).

The kernel layer is a layer between hardware and software. The kernel layer is configured to drive hardware to enable the hardware to operate. The kernel layer may include one or more of the following: a display drive, a camera drive, a sensor drive, and the like.

A software layer involved in the software architecture, a module included in the layer, and a function of the module are not specifically limited in this embodiment of this application.

The technical solutions of this application and how the technical solutions of this application resolve the above technical problems are described in detail below through specific embodiments. The following specific embodiments may be independently implemented, or may be combined with each other, and the same or similar concepts or processes may not be repeated in some embodiments.

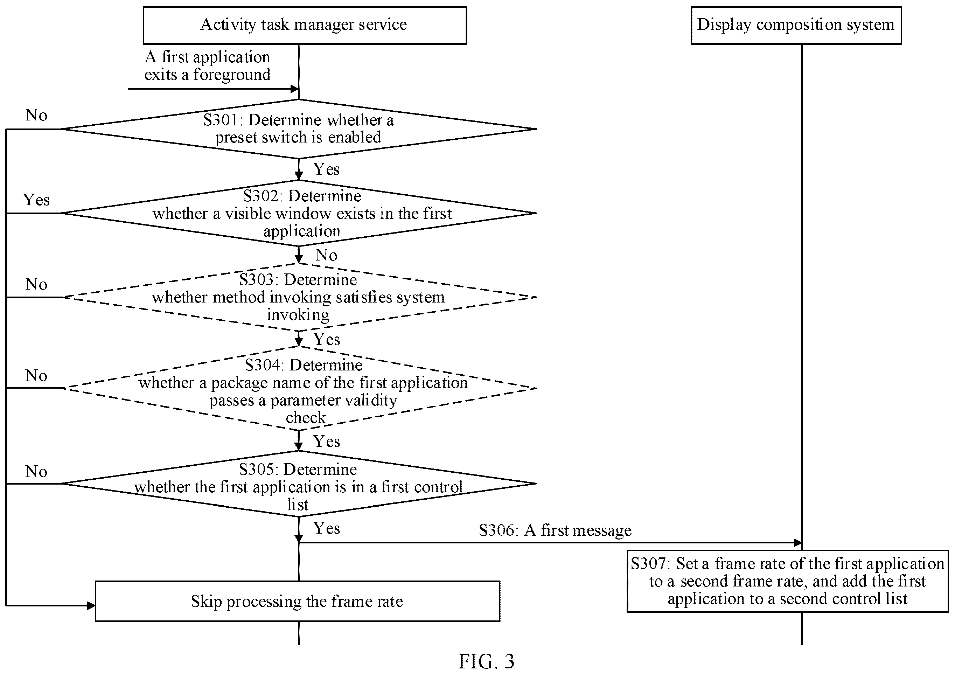

In an example, FIG. 3 is a schematic flowchart of a method for reducing power consumption according to an embodiment of this application. In an embodiment corresponding to FIG. 3, the electronic device may include modules such as an activity task manager service and a display composition system.

As shown in FIG. 3, the method for reducing power consumption may include the following steps.

S301: When the activity task manager service determines that a first application exits a foreground, the activity task manager service determines whether a preset switch is enabled.

The preset switch may be understood as a switch configured to implement the method for reducing power consumption provided in this embodiment of this application. The preset switch may alternatively be referred to as a background application frequency reduction optimization switch or the like. The preset switch may be preset in an electronic device. For example, the preset switch may be set before delivery of the electronic device, or the preset switch may be set after system upgrade is performed on the electronic device. Alternatively, the preset switch may be enabled or disabled based on a user operation. This is not limited in this embodiment of this application.

When the activity task manager service determines that the preset switch is enabled, the activity task manager service may perform the step shown in S302. Alternatively, when the activity task manager service determines that the preset switch is disabled, the activity task manager service may not process a frame rate of the first application.

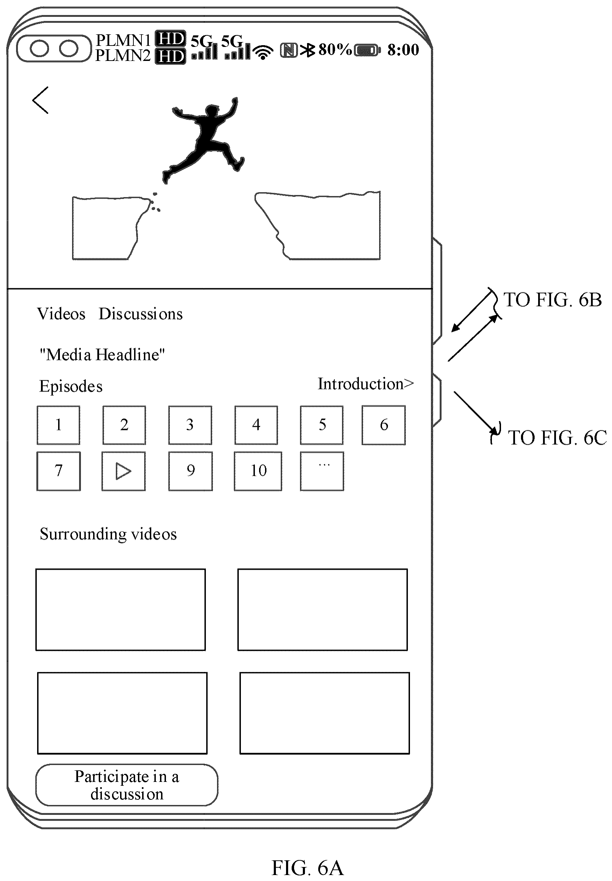

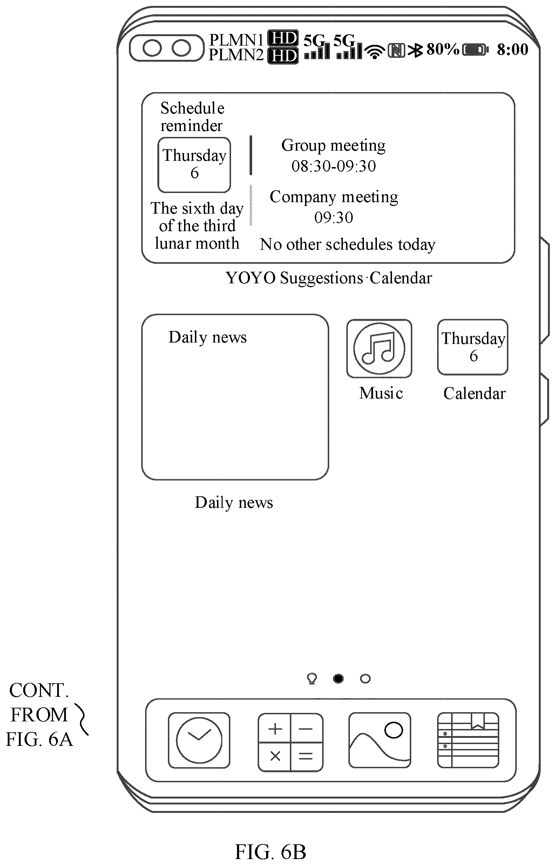

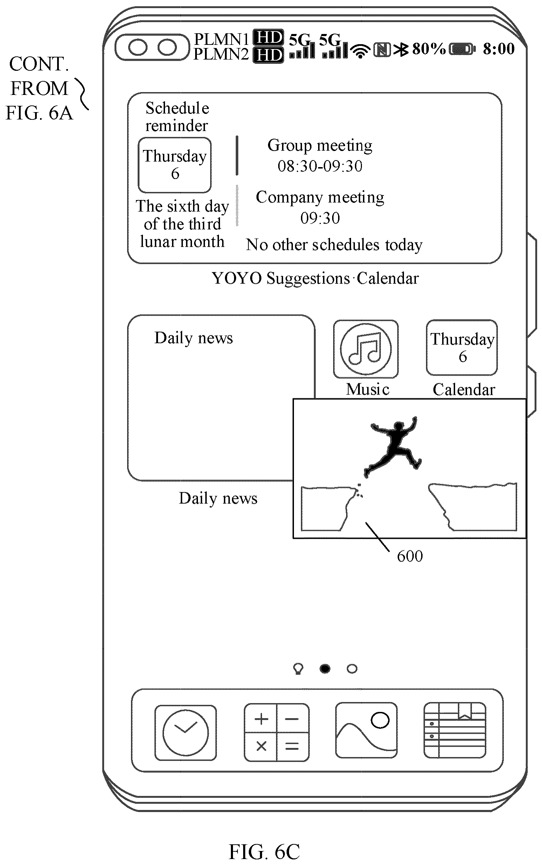

In an example, FIG. 6A, FIG. 6B, and FIG. 6C are a schematic diagram of an interface for switching an application state according to an embodiment of this application. In an embodiment corresponding to FIG. 6A, FIG. 6B, and FIG. 6C, a description is provided by using an example in which the electronic device is a mobile phone and the first application is a video application. The example does not constitute a limitation to this embodiment of this application.

The electronic device displays an interface shown in FIG. 6A. The interface may be an interface displayed by a video application, and the interface may display video content that is being played, and the like.

In an interface shown in FIG. 6A, in response to an operation of sliding up a bottom of a display by a user, the activity task manager service may detect an interface state of the first application. In other words, when an activity (activity) of the first application being in a stop (stop) state is detected, it is determined that the first application exits the foreground. In this case, the electronic device may display an interface shown in FIG. 6B or an interface shown in FIG. 6C.

Content in a desktop may be displayed on the interface shown in FIG. 6B, for example, at least one application icon is displayed.

In a possible implementation, in response to the operation that the first application exits the foreground, the electronic device may further display the interface shown in FIG. 6C. The interface may include a floating window 600 corresponding to a video application. Alternatively, in response to the operation that the first application exits the foreground, the electronic device may also display an interface of another application on the foreground. This is not limited in this embodiment of this application.

In a possible implementation, the electronic device may alternatively enable a preset switch by default or not set a preset switch (or it is understood as supporting the method for reducing power consumption provided in this embodiment of this application by default). In this scenario, the electronic device may alternatively skip determining whether the preset switch is enabled. In other words, when the activity task manager service determines that the first application exits the foreground, the step shown in S302 is performed.

In a possible implementation, in a case that the electronic device determines that the first application exits the foreground, the electronic device may also determine whether to set the frame rate of the first application to a second frame rate based on S301 to S307 when the electronic device detects that the first application requests for a vsync signal in the background.

S302: The activity task manager service determines whether a visible window exists in the first application.

The visible window may be understood as an application window whose window attribute is visible (visible), or may be understood as an application window displayed in the foreground of the electronic device. The visible window may be displayed in the foreground in a full screen, or may be displayed in a floating window of the foreground. The window that is displayed in the floating window of the foreground may include an interactive floating window and a non-interactive floating window. The non-interactive floating window may also be referred to as a mini window.

For example, referring to the embodiment corresponding to FIG. 6A, FIG. 6B, and FIG. 6C, when the first application is a video application and the video is in a playing state, the electronic device may display a floating window of the video application in the foreground in response to the operation that the video application exits the foreground. The floating window may continue to play video content, to avoid interrupting video playing of the video application. The floating window may refer to a floating window 600 on the interface shown in FIG. 6C.

It may be understood that in a scenario in which the first application still displays the visible window in the foreground after entering the background, to prevent the first application from triggering the electronic device to perform frame reduction after entering the background, which causes a low frame rate to affect normal running of the visible window of the foreground, the electronic device may detect the visible window of the first application, and perform subsequent frame reduction when it is ensured that no visible window exists in the foreground.

When the activity task manager service determines that the first application has no visible window, the step shown in S303 is performed. Alternatively, when the activity task manager service determines that the first application has the visible window, the frame rate of the first application is not processed.

In an example, the activity task manager service may determine whether the first application has the visible window through a user identifier (user identifier, UID) of the first application. For example, the activity task manager service queries the visible window corresponding to the UID of the first application. In other words, the activity task manager service queries the visible window by invoking a method visiblewindow(getUID()).

The activity task manager service may query the visible window at a local invoking interface. For example, the window manager may set a window state in an application visible window map (appvisiblewindowMAP) when detecting that the window changes, so that the activity task manager service may query the appvisiblewindowMAP for the visible window in the first application through an invoking method.

Alternatively, the activity task manager service may determine whether the first application has the visible window through information interaction between the activity task manager service and the window manager. For example, the activity task manager service may send a message used for querying the visible window in the first application to the window manager, and the window manager may query appvisiblewindowMAP for the visible window in the first application, and return to the activity task manager service through the message.

Optionally, S303: The activity task manager service determines whether method invoking satisfies system invoking.

In an example, the activity task manager service obtains a UID of an invoker by invoking getCallingUid(), and the invoker may be the UID of the activity task manager service, namely, a system UID (system_UID), to determine that the method invoking satisfies the system invoking.

When determining that the method invoking satisfies the system invoking, the activity task manager service performs the step shown in S304. Alternatively, when the activity task manager service determines that the method invoking does not satisfy the system invoking, the frame rate of the first application is not processed.

It may be understood that the activity task manager service may determine whether the system invoking is currently performed, to prevent an illegal invoking of a service and improve system security.

Optionally, S304: The activity task manager service determines whether a package name of the first application passes a parameter validity check.

In an example, the activity task manager service determines whether the package name of the first application is valid by invoking a parameter validity verification method TextUtils.isEmpty(packageName). The packageName in the parameter validity verification method may be the package name of the first application.

When the activity task manager service determines that the package name of the first application passes the parameter validity check, a step shown in S305 is performed. Alternatively, when the activity task manager service determines that the package name of the first application fails the parameter validity check, the frame rate of the first application is not processed.

It may be understood that S303 and S304 are both steps for improving system security, and the electronic device may also perform system security check through other steps. This is not limited in this embodiment of this application.

S305: The activity task manager service determines whether the first application is in a first control list.

The first control list is used for storing a package name of an application that is allowed to request for a vsync signal in the background, and the first control list is set in a memory to facilitate query at any time.

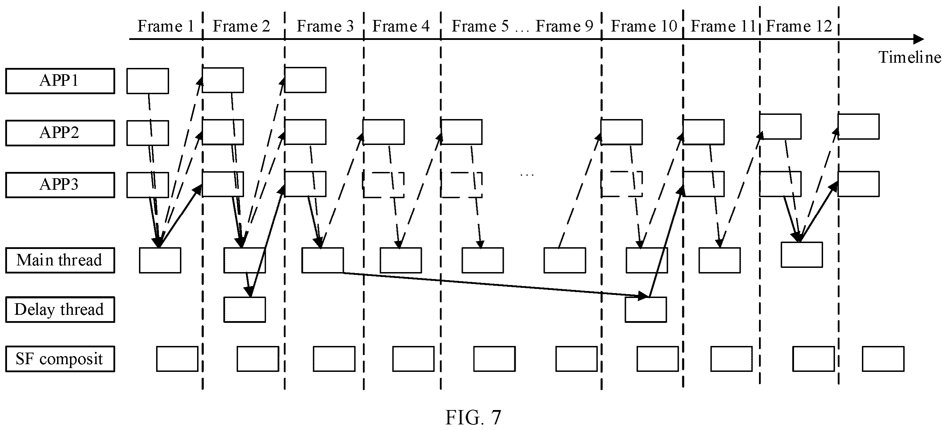

The first control list may be obtained by the electronic device by loading a configuration file during restart, or the first control list may be obtained by the electronic device by loading the updated configuration file after software update. For a specific obtaining manner, reference is made to the embodiment corresponding to FIG. 7. This is not limited in embodiments of this application.

When determining that the package name of the first application is included in the first control list, the activity task manager service performs a step shown in S306. Alternatively, when the activity task manager service determines that the package name of the first application is not in the first control list, the frame rate of the first application is not processed.

It may be understood that a sequential relationship of any step in S301-S305 is not specifically limited in this embodiment of this application.

S306: The activity task manager service sends a first message to the display composition system.

The first message is used for instructing to lower the frame rate of the first application, and the first message may include a package name of the first application, information used for indicating that a frame reduction feature is enabled, and information used for indicating that the first application is in a background. For example, the first message may include a package name (packagename), true (true), and a background type (type_background), true indicating that the frame reduction feature is enabled.

When the display composition system determines that the frame reduction feature is enabled based on the first message, the display composition system may invoke an interface to determine, from the activity task manager service, that the frame rate at which the frame reduction feature is enabled is the second frame rate.

The first frame rate is greater than the second frame rate, the first frame rate may be a value such as 120 Hz (or 90 Hz), and the second frame rate may be a value such as 15 Hz (or 30 Hz).

In a possible implementation, the first message may include the package name of the first application, the UID of the first application, the information used for indicating that a frame reduction feature is enabled, and the information used for indicating that the first application is in a background.

It may be understood that some applications in the electronic device may support an application cloning function, and package names of applications may not distinguish two applications that are cloned. Therefore, the electronic device may distinguish applications specifically running in an application cloning scenario through the package name of the first application and the UID of the first application, to improve accuracy of method for reducing power consumption.

S307: The display composition system sets the frame rate of the first application to the second frame rate, and adds the first application to a second control list.

The second control list may include a package name of an application, or a package name of an application+an application UID.

Further, after the electronic device adds the application to the second control list, the electronic device may manage an application whose frame has been reduced by using the second control list. For specific steps of the second control list, reference is made to steps shown in S506 and S507. Details are not described herein again.

In an example, when it is determined from the first message that the first application is in the background, the display composition system may add the package name of the first application (or the package name of the first application +the UID of the first application) to the second control list, and set the frame rate of the first application to the second frame rate.

After the display composition system sets the frame rate to the second frame rate, the display composition system may process delivering of the vsync signal based on the second frame rate when receiving the vsync signal requested by the first application and determining that the first application is in the second control list subsequently.

Based on the above, the electronic device may lower the frame rate when detecting that the first application exits the foreground and no visible window exists currently, and reduce a quantity of times of requesting for the vsync signal by the first application in the background, thereby reducing resource as a result of the first application requesting for the vsync signal in the background.

In a possible implementation, after S307, when the first application is in the background and the first application is in the first control list, the electronic device may perform a step of resuming the first frame rate of the first application in response to an operation of disabling the first application by the user, thereby removing the first application from the second control list. In this scenario, when the first application is enabled again, the first application may display the interface of the first application after requesting for the visible window based on the first frame rate because the first application already resumes to the first frame rate.

Alternatively, after S307, in response to the operation of disabling the first application by the user, the electronic device may not perform a step of setting the first application to the first frame rate, thereby removing the first application from the second control list. In this scenario, when the first application is enabled again, the electronic device may perform a step of setting the first application to the first frame rate, thereby moving the first application from the second control list when the application window is visible. In this way, the interface of the first application may be normally displayed in the foreground based on the first frame rate.

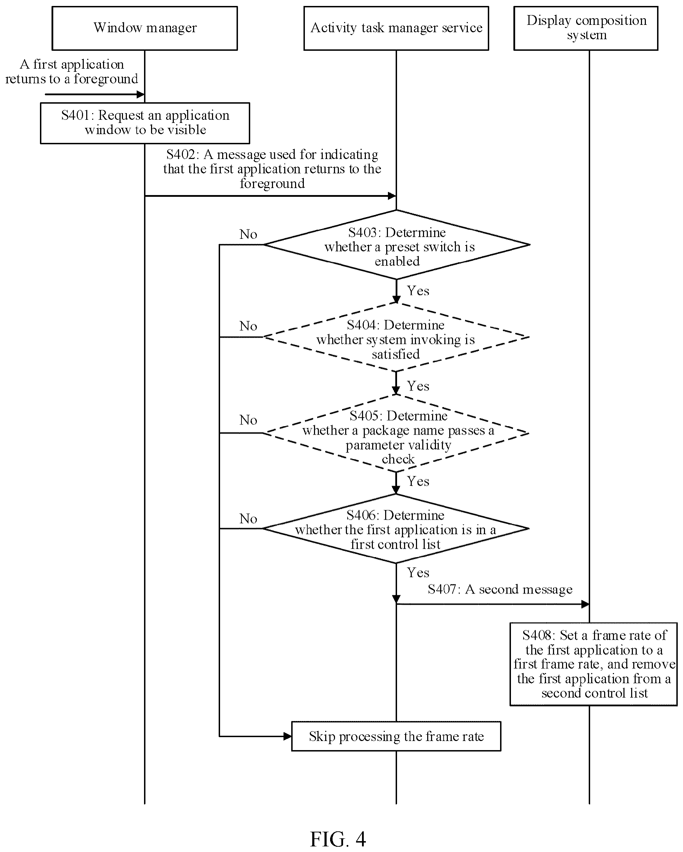

Based on the embodiment corresponding to FIG. 3, the electronic device may alternatively resume to the first frame rate when detecting that the first application returns from the background to the foreground, and the first application is not disabled in the process in which the first application returns from the background to the foreground. It may be understood that the first application in FIG. 4 may be an application in the second frame rate through determining from S301 to S307, and the first application is an application that is in the second control list.

In an example, FIG. 4 is a schematic flowchart of another method for reducing power consumption according to an embodiment of this application. In an embodiment corresponding to FIG. 4, the electronic device may include a window manager, an activity task manager service, and a display composition system.

As shown in FIG. 4, the method for reducing power consumption may include the following steps.

S401: When the window manager determines that a first application returns to a foreground, the window manager requests an application window to be visible.

The window requests the application window to be visible. In other words, the window manager may set an attribute of the application window to visible. In this case, the application window may be displayed on the foreground.

In an example, when the window manager may detect an interface state of the first application, the electronic device may display a background multi-tasking interface (not shown in FIG. 6A, FIG. 6B, and FIG. 6C) in response to an operation of sliding up a bottom by a user in an interface shown in FIG. 6B. The background multi-tasking interface may include a thumbnail of the first application. In response to a click operation on the thumbnail of the first application, the window manager may determine that the first application returns to the foreground when detecting that an activity of the first application is in a resume (resume) state. In this case, the electronic device may display an interface shown in FIG. 6A. A manner of returning the first application to the foreground may be a cold start or a hot start.

S402: The window manager sends a message used for indicating that the first application exits the foreground to the activity task manager service.

Adaptively, when determining that the first application exits the foreground, the activity task manager service performs a step shown in S403.

The window manager may perform the step shown in S402 when detecting that any application requests for a visible window.

S403: The activity task manager service determines whether a preset switch is enabled.

For meanings of the preset switch and an obtaining method of the preset switch, reference may be made to the step shown in S301. Details are not described herein again.

When determining that the preset switch is enabled, the activity task manager service performs the step shown in S404. Alternatively, when the activity task manager service determines that the preset switch is disabled, a frame rate of the first application is not processed.

Optionally, S404: The activity task manager service determines whether method invoking satisfies system invoking.

For a manner of determining whether the method invoking satisfies the system invoking by the activity task manager service, reference may be made to the step shown in S303. Details are not described herein again.

When determining that the method invoking satisfies the system invoking, the activity task manager service performs the step shown in S405. Alternatively, when the activity task manager service determines that the method invoking does not satisfy the system invoking, the frame rate of the first application is not processed.

Optionally, S405: The activity task manager service determines whether a package name of the first application passes a parameter validity check.

For a manner of determining whether the package name of the first application passes the parameter validity check by the activity task manager service, reference may be made to the step shown in S304. Details are not described herein again.

When the activity task manager service determines that the package name of the first application passes the parameter validity check, a step shown in S406 is performed. Alternatively, when the activity task manager service determines that the package name of the first application fails the parameter validity check, a step shown in S407 is performed.

S406: The activity task manager service determines whether the first application is in a first control list.

For meanings and uses of the first control list, reference may be made to steps shown in S305. Details are not described herein again.

When determining that the package name of the first application is included in the first control list, the activity task manager service performs a step shown in S407. Alternatively, when the activity task manager service determines that the package name of the first application is not in the first control list, the frame rate of the first application is not processed.

In a possible implementation, the activity task manager may determine whether to resume a frame rate for all applications resumed from the background to the foreground based on the steps shown in S403 to S406. Alternatively, the activity task manager may determine whether the first application is in the second control list based on a package name of the first application. For example, when determining that the first application is in the second control list, the task manager performs steps shown in S407 and S408.

S407: The activity task manager service sends a second message to the display composition system.

The second message is used for resuming the frame rate of the first application, and the second message may include a package name of the first application, information used for indicating that a frame reduction feature is disabled, and message used for indicating that the first application is in a foreground. For example, the second message may be ackagename, no (false), and a foreground type (type_foreground), where false indicates that the frame reduction feature is disabled.

When the display composition system determines that the frame reduction feature is disabled based on the first message, the display composition system may invoke an interface to determine, from the activity task manager service, that the frame rate at which the frame reduction feature is disabled is the first frame rate.

In a possible implementation, the second message may further include a UID of the first application.

S408: The display composition system sets the frame rate of the first application to the first frame rate, and removes the first application from the second control list.

For meanings of the second control list, reference may be made to the step shown in S307. Details are not described herein again.

For example, the display composition system may set the frame rate to the first frame rate when determining, in the second message, that the first application is in the foreground, and remove the package name of the first application (or the package name of the first application+the UID of the first application) from the second control list.

Based on the above, the electronic device may resume to the first frame rate when detecting that the first application returns to the foreground, to avoid that normal running of the first application in the foreground is affected when the frame rate is reduced to the second frame rate.

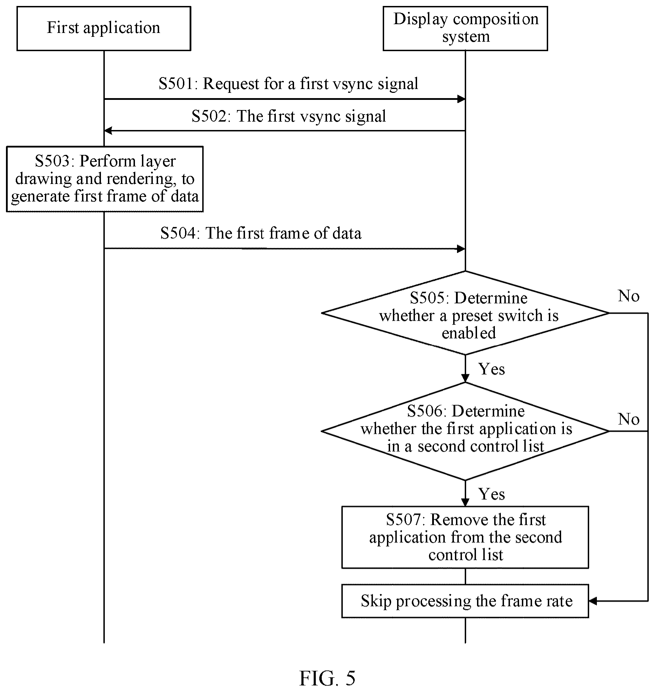

Based on the embodiment corresponding to FIG. 4, an embodiment of this application may provide a guarantee mechanism that the frame rate has not been resumed when it is detected that the first frame is displayed. For example, after S401 and before S408, when the electronic device receives the first frame data of the first application, the electronic device may resume the first frame rate based on the embodiment corresponding to FIG. 5, to avoid that the display composition system does not receive the first frame rate in the second message when the first application receives the frame data for the first time, resulting in an abnormal frame rate of the foreground of the first application.

In a possible implementation, when the electronic device receives the first frame of data of the first application after S408, the electronic device may process the first frame of data based on the first frame rate. In this case, a case that the frame rate is abnormal does not occur in the first application.

In an example, FIG. 5 is a schematic flowchart of resuming a frame rate according to an embodiment of this application.

As shown in FIG. 5, the method includes the following steps.

S501: A first application requests a display composition system for a first vsync signal.

The first application in S501 may be an application that is determined to perform frame reduction based on the embodiment corresponding to FIG. 3, and the first application belongs to a second control list.

In an example, the first application may send a message used for obtaining the first vsync signal to the display composition system.

A vsync signal may be a periodic signal, and a vsync signal period may be set based on a frame rate. When the frame rate is 120 Hz, the vsync signal period may be approximately 8.4 ms. When the frame rate is 15 Hz, the vsync signal period may be approximately 66.6 ms.

S502: The display composition system returns the first vsync signal to the first application.

S503: The first application performs layer drawing and rendering when receiving the first vsync signal, to generate first frame of data.

S504: The first application sends the first frame of data to the display composition system.

The first frame of data may carry layer information, the layer information may include a layer name, and the layer name includes a package name of the first application.

In the step shown in S504, the first frame of data may be a first frame of layer data received by the display composition system. For example, after S401, the first frame of data generated by the first application may be physically displayed after layer composition is performed by the display composition system. Therefore, it may be understood that when the display composition system detects that the first application has layer data (namely, the first frame of data) to be composed for the first time based on the layer information, it indicates that the application needs to resume foreground to be visible and display the first frame of image. Further, the display composition system may perform steps shown in S505 to S507 to resume the frame rate of the first application, thereby avoiding affecting display of the first application in the foreground.

S505: The display composition system determines whether a preset switch is enabled.

For meanings of the preset switch and an obtaining method of the preset switch, reference may be made to the step shown in S301. Details are not described herein again.

When determining that the preset switch is enabled, the display composition system performs the step shown in S506. Alternatively, when the display composition system determines that the preset switch is disabled, the frame rate of the first application is not processed.

S506: The display composition system determines whether the first application is in the second control list.

When determining that the second control list includes the package name of the first application, the display composition system performs a step shown in S507. Alternatively, when determining that the second control list does not include the package name of the first application, the display composition system does not process the frame rate of the first application.

S507: The display composition system sets the frame rate of the first application to the first frame rate, and removes the first application from the second control list.

In an example, the display composition system resumes to the first frame rate, and then removes the first application from the second control list, and the display composition system may deliver the vsync signal to the first application based on the first frame rate.

Based on the above, to prevent the display composition system from not receiving the first frame rate in the second message when the first application receives frame data for the first time, resulting in a frame rate abnormality in the foreground application and page frame freezing, the display composition system may resume to the first frame rate in advance when detecting that the first application is in the foreground and receives the first frame data.

With reference to the embodiments corresponding to FIG. 4 and FIG. 5, after the display composition system first resumes the first frame rate of the first application in advance based on the embodiment corresponding to FIG. 5, the display composition system receives the second message in S407. Adaptively, the display composition system may perform the step shown in S408 when receiving the second message. In this case, because the first application is not in the second control list, a result after the display composition system performs S408 is that the frame rate of the first application is not processed. Alternatively, the display composition system may alternatively determine, when the second message is received, whether the first application is in the second control list, and skip performing the step shown in S408 when it is determined that the first application is not in the second control list.

Based on the embodiments corresponding to FIG. 3 to FIG. 5, the electronic device may further provide a mechanism for delaying delivering of the vsync signal in the method for reducing power consumption.

In an example, FIG. 7 is a schematic diagram of a process of delivering a vsync signal according to an embodiment of this application.

In an embodiment corresponding to FIG. 7, the electronic device may run: an APP1, an APP2, an APP3, a main thread (or referred to as a main thread for short) in an event thread (event thread), a delay thread (delay thread) (or referred to as a delay thread for short) in the event thread, and an SF composit.

The main thread is used for detecting a vsync signal requested by the application, and implement delivering of the vsync signal. The delay thread is used for implementing delay delivery of the vsync signal by setting a timer.

The event thread may be a sub-thread in the display composition system. The SF composit may alternatively be a sub-thread in the display composition system. The SF composit is used for implementing layer composition processing.

As shown in FIG. 7, an electronic device may be at a first frame rate. When determining to perform frame reduction on a first application, the electronic device may switch a frame rate of the first application from the first frame rate to a second frame rate, and then switch the frame rate of the first application from the second frame rate to the first frame rate when the electronic device determines to resume the frame rate of the first application.

When the first frame rate is 120 Hz, a vsync signal period may be approximately 8.3 ms. In other words, a time interval between neighboring frames in FIG. 7 may be approximately 8.3 ms. In this embodiment of this application, a description is provided by using an example in which a screen refresh rate is 120 Hz. When the second frame rate is 15 Hz, the vsync signal period may be approximately 66.7 ms.

In a frame 1, the electronic device may simultaneously run the APP1, the APP1, the APP2, and the APP3 in a foreground. For example, the electronic device may display the APP1 and the APP2 in a split-screen manner, and display the APP3 in a form of a floating window. A form in which the APP1, the APP1, the APP2, and the APP3 run in the foreground is not limited in this embodiment of this application. Further, the APP1, the APP2, and the APP3 all request the display composition system for the vsync signal.

When the main thread determines that the APP1, the APP2, and the APP3 all request the vsync signal, the main thread may determine whether the APP1, the APP2, and the APP3 are in a second control list. When the main thread determines that none of the APP1, the APP2, and the APP3 is in the second control list, the main thread may generate the vsync signal and deliver the signal to the APP1, the APP2, and the APP3.

Before the main thread delivers the vsync signal in a frame 2, in response to an operation that the APP3 exits the foreground (or it is understood that the APP3 returns to a background), based on the embodiment corresponding to FIG. 3, the electronic device may set the frame rate of the APP3 to 15 Hz after determining that the APP3 satisfies the steps shown in S301 to S305, and add the APP3 to the second control list. In this scenario, the APP1 and the APP2 may continue to be kept in the foreground of the electronic device to run.

In the frame 2, the electronic device runs the APP1 and the APP2 in the foreground, and the electronic device runs the APP3 in the background. Further, the APP1, the APP2, and the APP3 all request the vsync signal.

When determining that the APP1, the APP2, and the APP3 all request the vsync signal, the main thread may determine whether the APP1, the APP2, and the APP3 are in the second control list. When the main thread determines that the APP1 and the APP2 are not in the second control list, the main thread generates the vsync signal and delivers the vsync signal to the APP1 and the APP2.

When the main thread determines that the APP3 is in the second control list, the main thread may add the APP3 to a third control list. The third control list is used for storing an application that does not temporarily deliver the vsync signal. Subsequently, the delay thread may deliver the vsync signal to an object in the third control list.

In an example, when the main thread determines that the APP3 is an object in the third control list, the main thread may awake the delay thread. The delay thread sets a first timer, a trigger time of the first timer is a first delivering time, and the delay thread sets a task of delivering the vsync signal to the APP3 when the first timer initiates a notification. When the first timer determines that the first delivering time arrives, the first timer may notify the delay thread through a SIGALRM signal, and the delay thread may perform a task of delivering the vsync signal to the APP3. After the task is completed, the display composition system clears an object in the third control list, and records the first delivering time of delivering the vsync signal to the APP3.

The main thread and the delay thread may both be created by the display composition system at a same moment. For example, the display composition system may create another thread in the display composition system after detecting device is enabled, such as the main thread and the delay thread.

The first delivering time may be 1 ms or 2 ms after the delay thread sets the first timer, which may be understood as that the delay thread can almost immediately deliver the vsync signal of the frame 2.

In a frame 3, the electronic device runs the APP1 and the APP2 in the foreground, and the electronic device keeps running the APP3 in the background. Further, the APP1, the APP2, and the APP3 all request the vsync signal.

When determining that the APP1, the APP2, and the APP3 all request the vsync signal, the main thread may determine whether the APP1, the APP2, and the APP3 are in the second control list. When the main thread determines that the APP1 and the APP2 are not in the second control list, the main thread delivers the vsync signal to the APP1 and the APP2.

When the main thread determines that APP3 is in the second control list, the main thread may add the APP3 to the third control list. The main thread may awake the delay thread, the delay thread sets a second timer, a trigger event of the second timer is a second delivering time, and the delay thread sets a task of delivering the vsync signal to the APP3 when the second timer initiates a notification. When the second timer determines that the second delivering time arrives, the second timer may notify the delay thread through the SIGALRM signal, and the delay thread may perform the task of delivering the vsync signal to the APP3. After the task is completed, the display composition system clears an object in the third control list, and records the second delivering time of delivering the vsync signal to the APP3.

The second delivering time may be a time obtained after the first delivering time plus 66.6 ms. For example, the second delivering time may be in a frame 10. Alternatively, it should be understood that a duration between the first delivering time and the time for which the delay thread sets the second timer is a first duration, a duration between the time for which the delay thread sets the second timer and the second delivering time is a second duration, and a sum of the first duration and the second duration is 66.6 ms. In this way, it may be ensured that a time interval between delivering of the vsync signal to the APP3 after the frame 2 and delivering of the vsync signal to the APP3 after the frame 10 is 66.6 ms. In other words, the frame rate of APP3 is 15 Hz is satisfied.

In a possible implementation, an APP4 may also run in the electronic device. After the APP3 enters the background, the APP4 also enters the background from the foreground, and the display composition system may add a package name of the APP4 to the second control list. Further, the display composition system may control signal delivering of the APP3 and the APP4 through one delay thread, or the display composition system may separately control signal delivering of the APP3 and the APP4 through two delay threads.

In an implementation, when the main thread determines that the APP4 requests the vsync signal and the package name of the APP4 is in the second control list, the main thread may also add the APP4 to the third control list. In this case, the third control list includes the APP3 and the APP4. When determining that the second delivering time arrives, the delay thread may uniformly deliver the vsync signal to the APP3 and the APP4 in the third control list.

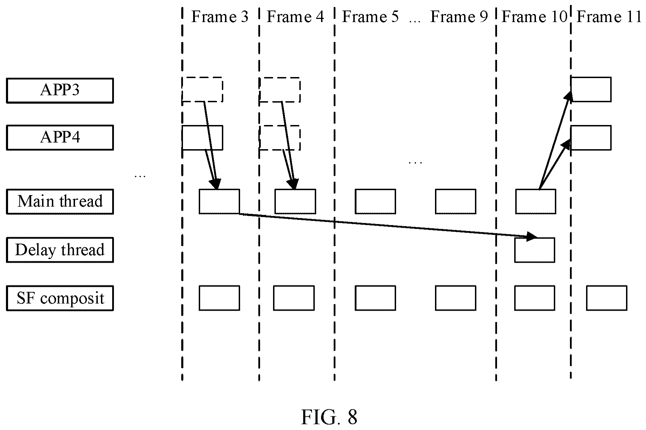

In an example, FIG. 8 is a schematic diagram of another process of delivering a vsync signal according to an embodiment of this application. As shown in FIG. 8, a description is provided by using a process of delivering vsync signals of an APP3 and an APP4 in a background as an example.

After the APP3 returns to the background, the APP4 may return to the background at any moment between a frame 3 and a frame 9. For example, the APP4 may return to the background at a frame 4. When the frame 4 returns to the background, the display composition system may reduce a frame rate of the APP4 to 15 Hz, and add the APP4 to a second control list.

Further, the APP4 requests a vsync signal. When the main thread determines that the APP4 is in the second control list, the main thread may add the APP4 to the third control list. In this case, the third control list includes the APP3 and the APP4. When the second timer determines that a second delivering time arrives, a second timer may notify a delay thread through a SIGALRM signal, and the delay thread implements vsync signal delivering of the APP3 and vsync signal delivering of the APP4 in a third control list.

In another implementation, when the main thread determines that the APP4 requests the vsync signal and the APP4 is in the second control list, the main thread may add the APP4 to a fourth control list, and awakes another delay thread. The another delay thread may be used for controlling delay delivery of the APP4. For example, in the another delay thread, a third timer may be set based on a vsync signal delivering period of the APP4. A trigger event of the third timer may be a third delivering time. The delay thread sets a task of delivering the vsync signal to the APP4 at the third delivering time. For example, when the frame rate of the APP4 is 30 Hz, a vsync signal delivering period of the APP4 may be 33.3 ms. It may be understood that an electronic device may separately control, through two delay threads, delivering of vsync signals of different applications at different frame rates. For a process of delivering vsync signals at different frame rates, reference may be made to the process of performing delay delivery of the APP3 through the delay thread. Details are not described herein again.

Between the frame 4 and the frame 9, the electronic device may run the APP2 in the foreground, and run the APP3 in the background. In this scenario, the APP1 stops a drawing and rendering process (in this case, the APP1 may stop running), the APP3 is in the background and does not request a vsync signal temporarily, and the APP2 may request a vsync signal at each frame between the frame 4 and the frame 9.

A description is provided by using the frame 4 as an example. For a process of delivering a vsync signal between the frame 5 and the frame 9, reference may be made to the frame 4. Details are not described subsequently again.

In the frame 4, when determining that the APP2 requests the vsync signal, the main thread may determine whether the APP2 is in the second control list. When the main thread determines that the APP2 is not in the second control list, the main thread delivers the vsync signal to the APP2. In addition, because the second delivering time indicated in the second timer is not reached at this time, the main thread does not deliver the vsync signal requested by the APP3.

In the frame 10, the electronic device may run the APP2 in the foreground, and run the APP3 in the background. The APP2 requests the vsync signal, and the APP3 does not request the vsync signal.

When determining that the APP2 requests the vsync signal, the main thread may determine whether the APP2 is in the second control list. When the main thread determines that the APP2 is not in the second control list, the main thread delivers the vsync signal to the APP2.

When the second timer determines that a second delivering time arrives, a second timer may notify a delay thread through a SIGALRM signal, and the delay thread may deliver the vsync signal requested by the APP3 in the frame 3 to the APP3, to implement delay delivery of the vsync signal requested by a background application.

In the frame 11, the electronic device may run the APP2 in the foreground, and run the APP3 in the background. The APP2 requests the vsync signal, and the APP3 does not request the vsync signal.

When determining that the APP2 requests the vsync signal, the main thread may determine whether the APP2 is in the second control list. When the main thread determines that the APP2 is not in the second control list, the main thread delivers the vsync signal to the APP2.

Before the main thread delivers the vsync signal in the frame 12, the APP3 returns to the foreground, the display composition system may remove the APP3 from the second control list, and the display composition system may switch the frame rate of the APP3 to 120 Hz.

In the frame 12, the electronic device may run the APP2 and the APP3 in the foreground. The APP2 and the APP3 both request the vsync signal.

After the frame 12, when determining that the APP2 and the APP3 request the vsync signal, the main thread may determine whether the APP2 and the APP3 are in the second control list. When the main thread determines that the APP2 and the APP3 are not in the second control list, the main thread delivers the vsync signal to the APP2 and the APP3.

It may be understood that the electronic device may set the delay thread to delay delivery of the vsync signal initiated by the background application, so as to reduce power consumption as a result of the background application requesting for a vsync signal to draw an image frame.

In the embodiments corresponding to FIG. 4 to FIG. 8, content in the first control list may be flexibly added or deleted at a cloud, and the cloud may push the first control list to the electronic device of an executing model through the configuration file. Adaptively, in the electronic device, the configuration file pushed at the cloud may be received by registering parameter upgrade broadcast in AndroidManfest or setting a parameter upgrade broadcast receiver.

The first control list may be obtained by the electronic device by loading the configuration file during restart, or the first control list may be obtained by the electronic device by loading an updated configuration file after software is updated.

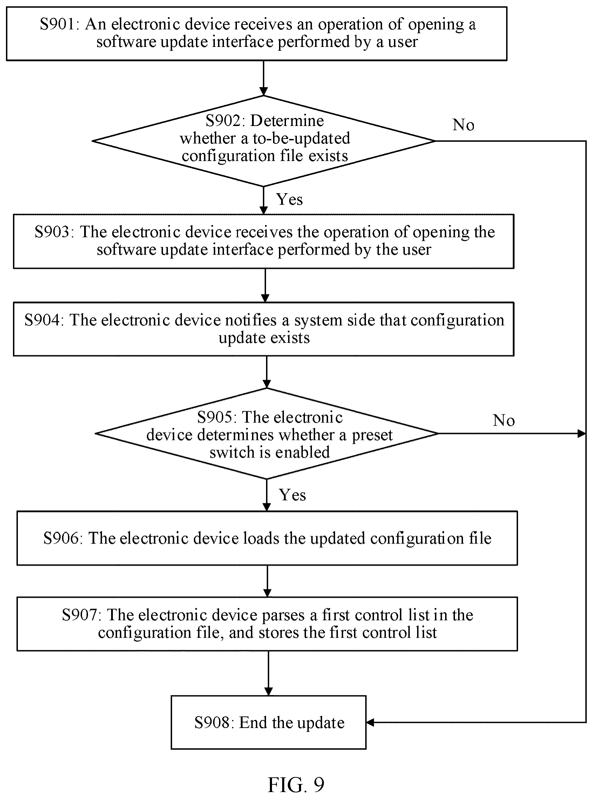

In an implementation, FIG. 9 is a schematic flowchart of obtaining a first control list according to an embodiment of this application. As shown in FIG. 9, a method for obtaining the first control list may include the following steps.

S901: An electronic device receives an operation of opening a software update interface performed by a user.

The operation of opening the software update interface performed by the user may be that the user enters the software update interface based on a path of Settings-System and Updates->Software Update.

S902: The electronic device determines whether a to-be-updated configuration file exists in response to the operation of opening the software update interface performed by the user.

When detecting that an updated configuration file exists, the electronic device may display a configuration update button on the software update interface, and perform a step shown in S903. Alternatively, when the electronic device determines that the updated configuration file does not exist, the electronic device performs the step shown in S908.

S903: The electronic device receives an operation for the configuration update button performed by the user.

S904: The electronic device notifies a system side that configuration update exists in response to the operation for the configuration update button performed by the user.

S905: The electronic device determines whether a preset switch is enabled.

When determining that the preset switch is enabled, the electronic device performs the step shown in S906, or when determining that the preset switch is disabled, the electronic device performs the step shown in S908. For a meaning of the preset switch, reference may be made to the step shown in S301. Details are not described herein again.

S906: The electronic device loads the updated configuration file.

S907: The electronic device parses the first control list in the configuration file, and stores the first control list.

S908: The electronic device ends the update.

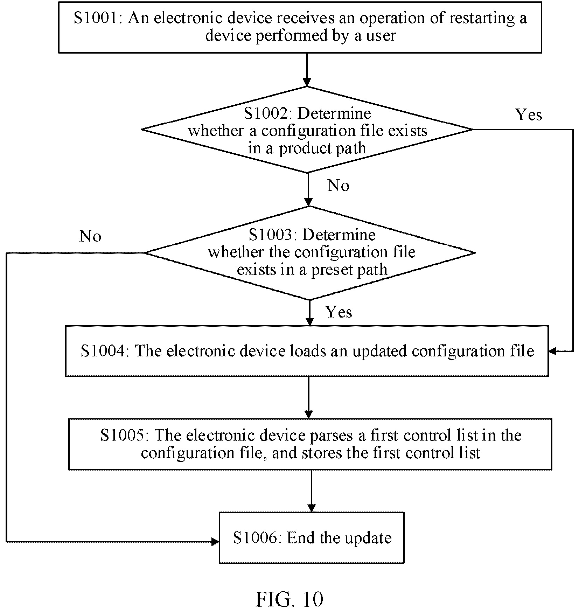

In another implementation, FIG. 10 is another schematic flowchart of obtaining a first control list according to an embodiment of this application. As shown in FIG. 10, a method for obtaining the first control list may include the following steps.

S1001: An electronic device receives an operation of restarting a device performed by a user.

S1002: The electronic device determines whether a configuration file exists in a product path.

The product path may store a file including a product feature of the electronic device. When finding the configuration file in the product path, the electronic device performs a step shown in S 1004, or when not finding the configuration file in the product path, the electronic device performs a step shown in S1003.

S 1003: The electronic device determines whether the configuration file exists in a preset path.

The preset path may be a path in which the electronic device stores the configuration file by default, and the preset path does not distinguish a version situation of a device. When finding the configuration file in the preset path, the electronic device performs a step shown in S1004, or when not finding the configuration file in the preset path, the electronic device performs a step shown in S1006.

It may be understood that the product path and the preset path may both be paths for storing the configuration file. To adapt to more device scenarios, the electronic device may separately search the product path and the preset path for the configuration file.

S1004: The electronic device loads an updated configuration file.

S1005: The electronic device parses the first control list in the configuration file, and stores the first control list.

S1006: End the update.

It may be understood that the first control list is not unchanged, but may be increased or decreased based on a requirement, and is pushed to the electronic device through the configuration file, to ensure accuracy of the first control list in this embodiment of this application.

In a possible implementation, a second application may also run in the electronic device. The second application may be an application that does not allow frame reduction. Referring to the interface shown in FIG. 6A, in response to an operation that the first application returns to the background, the electronic device may also display the interface of the second application in an interface shown in FIG. 6B. The operation that the first application returns to the background may be a sliding operation of a user to left or right along a bottom of a display.

In response to an operation that the first application returns to the foreground, the electronic device may resume displaying the interface shown in FIG. 6A. In this case, the second application is in the background.

In a scenario in which the second application switches from the background to the foreground or from the foreground to the background, the frame rate of the second application may remain unchanged.

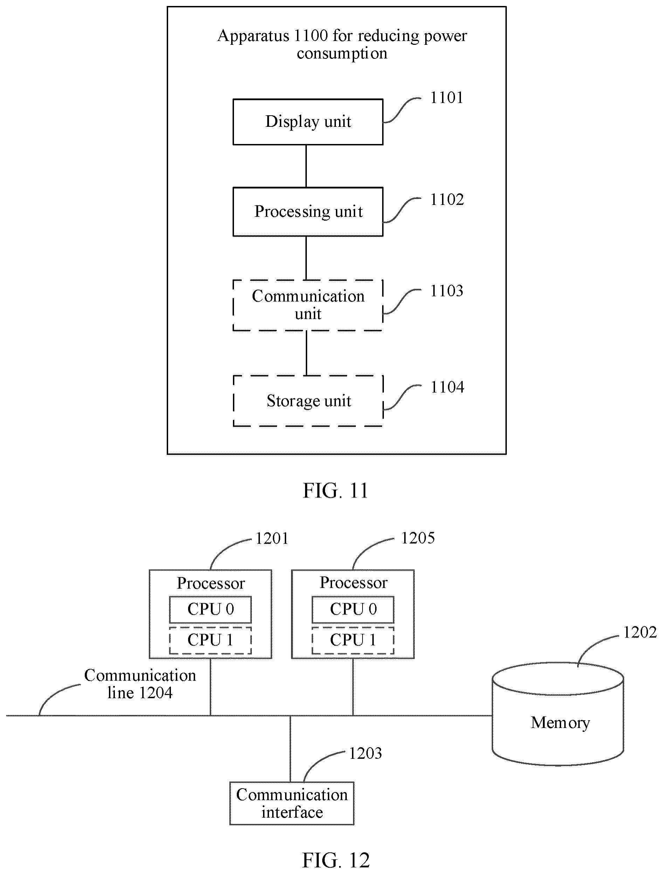

The method provided in embodiments of this application is described above with reference to FIG. 4 to FIG. 10, and an apparatus for performing the above method provided in embodiments of this application is described below. As shown in FIG. 11, FIG. 11 is a schematic structural diagram of an apparatus for reducing power consumption according to an embodiment of this application. The apparatus for reducing power consumption may be an electronic device in embodiments of this application, or may be a chip or a chip system in the electronic device.

As shown in FIG. 11, the apparatus 1100 for reducing power consumption may be used in a communication device, a circuit, a hardware component, or a chip. The apparatus 1100 for reducing power consumption includes a display unit 1101 and a processing unit 1102. The display unit 1101 is configured to support a display step performed in the method for reducing power consumption. The processing unit 1102 is configured to support the apparatus 1100 for reducing power consumption to perform a step of information processing.

In a possible implementation, the apparatus 1100 for reducing power consumption may further include a communication unit 1103. The communication unit 1103 is configured to support the apparatus 1100 for reducing power consumption to perform steps such as receiving or sending a message.

The apparatus for reducing power consumption in embodiments of this application may all include the unit in this embodiment corresponding to FIG. 11.

Specifically, the processing unit 1102 may be integrated with the display unit 1101, and the processing unit 1102 may communicate with the display unit 1101.

In a possible implementation, the apparatus 1100 for reducing power consumption may further include a storage unit 1104. The storage unit 1104 may include one or more memories, and the memories may be one or more devices or components in a circuit for storing programs or data.

The storage unit 1104 may exist independently, and is connected to the processing unit 1102 through a communication bus. Alternatively, the storage unit 1104 may be integrated with the processing unit 1102.

For example, the apparatus 1100 for reducing power consumption may be the chip or the chip system of the electronic device in embodiments of this application. The storage unit 1104 may store computer-executable instructions of the method for the electronic device, so that the processing unit 1102 performs the method for the electronic device in the foregoing embodiments. The storage unit 1104 may be a register, a cache, a random access memory (random access memory, RAM), or the like. The storage unit 1104 may be integrated with the processing unit 1102. The storage unit 1104 may be a read-only memory (read-only memory, ROM) or another type of static storage device that may store static information and instructions. The storage unit 1104 may be independent of the processing unit 1102.

In a possible implementation, the apparatus 1100 for reducing power consumption may further include a communication unit 1103. The communication unit 1103 is configured to support interaction between the apparatus 1100 for reducing power consumption and another device. In an example, when the apparatus 1100 for reducing power consumption is the electronic device, the communication unit 1103 may be a communication interface or an interface circuit. When the apparatus 1100 for reducing power consumption is the chip or the chip system in the electronic device, the communication unit 1103 may be the communication interface. For example, the communication interface may be an input/output interface, a pin, or a circuit.

The apparatus in this embodiment may be accordingly configured to perform the steps in the foregoing method embodiments, implementation principles and technical effects of the apparatus and the method embodiments are similar, and details are not described herein again.

FIG. 12 is a schematic diagram of a hardware structure of another electronic device according to an embodiment of this application.

The electronic device may include a processor 1201, a communication line 1204, and at least one communication interface (for example, a description is provided by using a communication interface 1203 as an example in FIG. 12).

The processor 1201 may be a general-purpose central processing unit (central processing unit, CPU), a microprocessor, an application specific integrated circuit (application-specific integrated circuit, ASIC), or one or more integrated circuits configured to control the execution of the processes of the solutions of this application.

The communication line 1204 may include a circuit configured to transmit information between the foregoing components.

The communication interface 1203 is an apparatus of any transceiver type, and is configured to communicate with another device or a communication network, such as the Ethernet or a wireless local area network (wireless local area networks, WLAN).

Possibly, the electronic device may further include a memory 1202.

The memory 1202 may be a read-only memory (read-only memory, ROM) or another type of static storage device that may store static information and instructions, or a random access memory (random access memory, RAM) or another type of dynamic storage device that may store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that may be used to carry or store expected program code in a form of an instruction or a data structure and that may be accessed by a computer, but is not limited thereto. The memory may exist independently, and is connected to the processor through the communication line 1204. Alternatively, the memory may be integrated with the processor.

The memory 1202 is configured to store computer executable instructions for executing the solutions of this application, and the processor 1201 controls execution. The processor 1201 is configured to execute the computer executable instructions stored in the memory 1202 to implement the method provided in embodiments of this application.

Possibly, the computer executable instructions in this embodiment of this application may also be referred to as application code. This is not specifically limited in this embodiment of this application.

During specific implementation, in an embodiment, the processor 1201 may include one or more CPUs, for example, a CPU 0 and a CPU 1 in FIG. 12.

During specific implementation, in an embodiment, the electronic device may include a plurality of processors, for example, a processor 1201 and a processor 1205 in FIG. 12. Each of these processors may be a single-core (single-CPU) processor, or may be a multi-core (multi-CPU) processor. The processor herein may be one or more devices, circuits, and/or processing cores configured to process data (for example, a computer program instruction).

In the foregoing embodiment, the instructions stored in the memory for execution by the processor may be implemented in a form of a computer program product. The computer program product may be pre-written into the memory, or may be downloaded and installed in the memory in a form of software.

The computer program product includes one or more computer instructions. When the computer program instructions are loaded and executed on the computer, processes or functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that may be stored by the computer, or may be a data storage device, such as a server or a data center, integrating one or more usable media. The usable medium may include a magnetic medium (such as a floppy disk, a hard disk, or a magnetic tape), an optical medium (such as a digital versatile disc (digital versatile disc, DVD)), a semi-conductive medium (such as a solid state disk (solid state disk, SSD)), and the like.

An embodiment of this application further provides a computer-readable storage medium. All or some of methods in the foregoing embodiments may be implemented by using software, hardware, firmware, or any combination thereof. The computer-readable medium may include a computer storage medium and a communication medium, and may further include any medium that may transmit a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server, or another remote source by using a coaxial cable, an optical fiber cable, a twisted pair, a DSL or wireless technologies (such as infrared ray, radio, and microwave), the coaxial cable, the optical fiber cable, the twisted pair, the DSL or the wireless technologies such as infrared ray, radio, and microwave are included in the definition of the medium. The magnetic disk and the optical disc used herein include a compact disc (CD), a laser disc, an optical disc, a digital versatile disc (digital versatile disc, DVD), a floppy disk, and a Blu-ray disc. The magnetic disk generally reproduces data in a magnetic manner, and the optical disc reproduces data optically by using a laser.

The foregoing combination should also be included in the scope of the computer-readable medium. The above descriptions are merely specific implementations of the present invention, and are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

It should be noted that user information (including but not limited to user device information and user personal information) and data (including but not limited to data for analysis, stored data, and displayed data) involved in this application are all information and data authorized by a user or fully authorized by all parties, and collection, use, and processing of relevant data need to comply with relevant laws, regulations, and standards. Corresponding operation entries are provided for the user to select authorization or rejection.

## Claims

1. A method for reducing power consumption, comprising:
displaying, by an electronic device, a first interface of a first application, wherein the first application is at a first frame rate; and
displaying, by the electronic device, a second interface in response to a first operation, wherein the second interface does not comprise any window of the first application; and
the first application sends a drawing request to perform drawing in a first window, the electronic device sets a frame rate of the first application to a second frame rate, the second frame rate is less than the first frame rate, and the first window is invisible.

2. The method according to claim 1, wherein that the electronic device sets a frame rate of the first application to a second frame rate comprises:
setting, by the electronic device, the frame rate of the first application to the second frame rate when the first application belongs to a first list, wherein the first list comprises an application allowed to request for a vertical synchronization vsync signal in a background.

3. The method according to claim 2, further comprising:
displaying, by the electronic device, a third interface of a second application, wherein the second application is at the first frame rate; and
displaying, by the electronic device, a fourth interface in response to a second operation, wherein the fourth interface does not comprise any window of the second application; and
the second application sends the drawing request to perform drawing in the second window, the electronic device keeps the second application at the first frame rate, the second window is invisible, and the second application does not belong to the first list.

4. The method according to claim 2, wherein after the electronic device sets a frame rate of the first application to a second frame rate, the method further comprises:
adding, by the electronic device, the first application to a second list, to obtain a third list, wherein the second list comprises an application at the second frame rate, and the third list comprises the first application.

5. The method according to claim 4, wherein a first thread is run in the electronic device, and after the adding, by the electronic device, the first application to a second list, the method further comprises:
delivering, by the electronic device, the first vsync signal to the first application at a second moment through the first thread when receiving, at a first moment, a first vsync signal request sent by the first application; and
delivering, by the electronic device, a second vsync signal to the first application at a fourth moment through the first thread when receiving, at a third moment, a second vsync signal request sent by the first application, wherein the second vsync signal request is a next vsync signal request of the first vsync signal request, and a time interval between the fourth moment and the second moment is determined by the electronic device based on the second frame rate.

6. The method according to claim 5, wherein the delivering, by the electronic device, a second vsync signal to the first application at a fourth moment through the first thread when receiving, at a third moment, a second vsync signal request sent by the first application comprises:
awaking, by the electronic device, the first thread when receiving, at the third moment through a second thread, the second vsync signal request sent by the first application and determining that the first application is in the third list, wherein the first thread starts a timer, and the timer notifies the first thread to deliver, at the fourth moment, the second vsync signal to the first application.

7. The method according to claim 6, wherein the electronic device runs a third application in a foreground, and the method further comprises:
delivering, by the electronic device, a third vsync signal to the third application through the second thread and delivering the first vsync signal to the first application at the second moment through the first thread when the electronic device receives a third vsync signal request sent by the third application.

8. The method according to claim 5, wherein a fourth application is further run in the electronic device, the fourth application belongs to the first list and belongs to the third list, the electronic device receives, at a moment between the third moment and the fourth moment, a fourth vsync signal request sent by the fourth application, and the method further comprises:
delivering, by the electronic device, the second vsync signal to the first application at the fourth moment through the first thread, and delivering the fourth vsync signal to the fourth application at the fourth moment.

9. The method according to any one of claims 6 to 8, wherein the electronic device is configured with a display composition system, an event thread event thread is run in the display composition system, the second thread is a main thread main thread in the event thread, and the first thread is a delay thread delay thread in the event thread.

10. The method according to claim 4, further comprising:
setting, by the electronic device, the frame rate of the first application to the first frame rate in response to an operation of closing the first application when the first application belongs to the first list; and
removing, by the electronic device, the first application from the third list.

11. The method according to claim 1, wherein the electronic device is configured with an activity task manager service and a display composition system, and that the electronic device sets a frame rate of the first application to a second frame rate comprises:
sending, by the task manager service, a first message to the display composition system, wherein the first message comprises a package name of the first application, information used for indicating that a frame reduction feature is enabled, and information used for indicating that the first application is in a background;
obtaining, by the display composition system, the second frame rate based on the information used for indicating that the frame reduction feature is enabled; and
setting, by the display composition system, the frame rate of the first application to the second frame rate.

12. The method according to claim 11, wherein the first message further comprises a user identifier UID of the first application.

13. The method according to claim 4, wherein after the adding, by the electronic device, the first application to a second list, to obtain a third list, the method further comprises:
requesting, by the electronic device, a window of the first application to be visible in response to a third operation;
setting, by the electronic device, the frame rate of the first application to the first frame rate when the first application belongs to the first list; and
removing, by the electronic device, the first application from the third list.

14. The method according to claim 13, wherein before the setting, by the electronic device, the frame rate of the first application to the first frame rate, the method further comprises:
setting, by the electronic device, the frame rate of the first application to the first frame rate when the electronic device receives first frame of data from the first application and the electronic device determines that the first application belongs to the third list, wherein the frame data is data obtained through layer rendering when the first application receives a vsync signal; and
removing, by the electronic device, the first application from the third list.

15. The method according to claim 13, wherein the electronic device is configured with a window manager, an activity task manager service, and a display composition system;
the requesting, by the electronic device, a window of the first application to be visible comprises:
requesting, by the window manager, the window of the first application to be visible;
sending, by the window manager, a second message to the activity task manager service, wherein the second message is used to instruct the first application to return to a foreground; and
the setting, by the electronic device, the frame rate of the first application to the first frame rate when the first application belongs to the first list comprises:
sending, by the activity task manager service, a third message to the display composition system in response to the second message when the activity task manager service determines that the first application belongs to the first list, wherein the third message comprises a package name of the first application, information used for indicating that a frame reduction feature is disabled, and information used for indicating that the first application is in a foreground;
obtaining, by the display composition system, the first frame rate based on the information used for indicating that the frame reduction feature is disabled; and
setting, by the display composition system, the frame rate of the first application to the first frame rate.

16. The method according to claim 15, wherein the second message further comprises a user identifier UID of the first application.

17. An electronic device, comprising a memory, a processor, and a computer program stored in the memory and executable on the processor, wherein the processor, when executing the computer program, causes the electronic device to perform the method according to any one of claims 1 to 16.

18. A computer-readable storage medium, storing a computer program, wherein the computer program, when executed by a processor, causes a computer to perform the method according to any one of claims 1 to 16.
